# EUROPÄISCHE PATENTANMELDUNG

(11) **EP 2 365 408 A1**
(43) Veröffentlichungstag der Anmeldung: **14.09.2011**
(21) Anmeldenummer: 10155788.2
(22) Anmeldetag: 08.03.2010
(51) Int. Cl.: G05B 19/042, H02K 11/00

(54) **Antriebssäule mit Datenspeicher und Möbelstück mit solch einer Antriebssäule**

(71) Anmelder: Kesseböhmer Produktions GmbH + Co. KG, 73235 Weilheim/Teck (DE)
(72) Erfinder: Köder, Michael, 73207 Plochingen (DE); Buitmann, Michael, 73230 Kirchheim unter Teck (DE)
(74) Vertreter: Prüfer & Partner GbR European Patent Attorneys

(57) **Zusammenfassung**

Eine Antriebssäule (6), beispielsweise eines Möbelstücks (9), enthält einen Motor (1), eine Motorplatine (2), ein Motorzuleitungskabel (3) und einen Motorstecker (4). In der Antriebssäule (6) ist in die Motorplatine (2), das Motorzuleitungskabel (3) oder den Motorstecker (4) ein Identifizierungsmittel (5) integriert, auf dem Daten zur Identifizierung der jeweiligen Antriebssäule (6) hinterlegt sind. Bei der Montage werden diese Daten auf eine Steuereinheit (10) des Möbelstücks (9) übertragen und programmieren diese entsprechend, so dass eine Verwechslungsgefahr reduziert wird und das Herstellungsverfahren vereinfacht wird.

## Beschreibung

Die vorliegende Erfindung betrifft eine Antriebssäule mit einem Datenspeicher und insbesondere eine solche Antriebssäule für ein Möbelstück.

Es ist bei modernen Büroeinrichtungen häufig gewünscht, dass insbesondere die Tische flexibel in ihrer Verwendung sind. So dient es einer besseren Körperhaltung, wenn die Höhe einer Tischoberfläche an die Körpergröße angepasst werden kann. Auch die Verstellung eines Tisches zur Verwendung im Stehen oder mit schräg gestellter Tischplatte wird häufig gewünscht, um eine ideale Arbeitsposition, bzw. einen Wechsel zwischen verschiedenen Arbeitspositionen zu ermöglichen.

Eine Verstellung der Höhe beispielsweise von einer Tischplatte kann jedoch, abhängig von dem Gewicht der Platte oder deren Befestigung, sehr schwierig sein. Aus diesem Grund werden elektromechanische Verstellmittel verwendet, um beispielsweise Säulen, auf denen die Tischplatten lagern, elektromechanisch zu steuern. Solche Steuerungen ermöglichen dabei auch weitere Funktionen, wie beispielsweise Kindersicherungen, abgespeicherte und bevorzugte Positionen, Höhenanzeigen und Ähnliches.

Ein höhenverstellbarer Antrieb zur Verwendung in einem Möbelstück ist beispielsweise aus DE 20 2005 021 004 U1 bekannt. Derartige Antriebe weisen einen Motor und mechanische Antriebskomponenten auf. Diese werden in einer Antriebssäule angeordnet. Nach der Endmontage werden die Säulen einer 100% Prüfung unterzogen, die automatisch abläuft. Diese dient der Überprüfung der Funktionsfähigkeit der einzelnen Komponenten.

Zusätzlich gibt es eine Steuereinheit und einen Handschalter, um diese Einheiten zu verfahren und zu synchronisieren. Die verwendeten Steuereinrichtungen werden separat mit dem entsprechenden Steuerprogramm versehen und müssen nach der Montage der entsprechenden Säule zugeordnet werden.

Da dies ein separater Vorgang ist, erfordert es einen gewissen Aufwand bei der Herstellung, und es kann zu Verwechslungen bei der Zusammenführung von Antrieben und Steuerungen kommen.

Es ist daher Aufgabe der Erfindung, eine Antriebssäule bzw. ein Möbelstück mit einer Antriebssäule zur Verfügung zu stellen, die eine vereinfachte Herstellung und eine unkomplizierte Montage ermöglichen, ohne eine Verwechslungsgefahr bei der Montage mit sich zu bringen.

Diese Aufgabe wird erfindungsgemäß durch die Vorrichtungen gemäß den Patentansprüchen 1, 6 und 12, sowie durch das Verfahren gemäß Patenanspruch 13 gelöst. Vorteilhafte Weiterbildungen sind Gegenstand der Unteransprüche.

Die mit der Erfindung erzielten Vorteile bestehen insbesondere darin, dass eine Antriebssäule ein elektronisches Identifizierungsmittel aufweist. Das Identifizierungsmittel hat Identifizierungsdaten gespeichert, die an eine Steuereinheit eines Möbelstücks gesendet werden können. Dadurch kann die entsprechende Antriebssäule eindeutig identifiziert werden, und es besteht keine Verwechslungsgefahr der einzelnen Antriebe.

Es ist außerdem ein Vorteil, dass keine separaten, bzw. auf die individuellen Ansprüche hin ausgerichteten, Steuereinheiten vorprogrammiert werden müssen. Somit können immer dieselben unprogrammierten Steuereinheiten für die verschiedenen Einsatzgebiete verwendet werden, und es ergeben sich große Vereinfachungen bei dem Herstell- und Montageprozess. Dies verringert zudem den administrativen Aufwand.

Das Identifizierungsmittel kann dabei ein einfacher Datenspeicher oder auch ein Mikrocontroller sein, der direkt die Steuerung des Antriebs übernehmen kann. Dies erlaubt eine dezentrale Steuerung, unabhängig von dem jeweiligen Steuergerät. In Kombination mit einem Mittel zum Erfassen der vorliegenden Verstellung wird damit eine Selbstregelung der Verstellung ermöglicht.

Der Datenspeicher kann eine Steuereinheit enthalten, die eine Steuerung der Antriebssäule ermöglicht.

Zudem wird die Antriebssäule vorteilhafterweise mit einem Möbelstück kombiniert, wobei das Möbelstück eine Steuereinheit, zur Erkennung und zur Steuerung der einzelnen Antriebssäulen, sowie ein Datenverbindungsmittel aufweist, das dem Datenaustausch dient.

Eine weitere vorteilhafte Ausgestaltung der Erfindung besteht darin, dass das Identifizierungsmittel mit Datenverbindungsmitteln vorgesehen ist. So ist eine Datenverbindung, die vorteilhafterweise auch eine drahtlose Verbindung sein kann, zwischen dem Möbelstück und den einzelnen Antriebssäulen, aber auch direkt zwischen den Antriebssäulen ermöglicht.

Einzelheiten, Vorteile und Weiterentwicklungen der Erfindung werden anhand einer Ausführungsform unter Bezugnahme auf die Zeichnung näher erläutert. Dabei zeigt:
Fig. 1 eine Seitenansicht einer Antriebsquelle einer Antriebssäule;
Fig. 2 eine vereinfachte Darstellung einer Antriebssäule; und
Fig. 3 ein Möbelstück mit montierten Antriebssäulen und einer Steuereinheit.

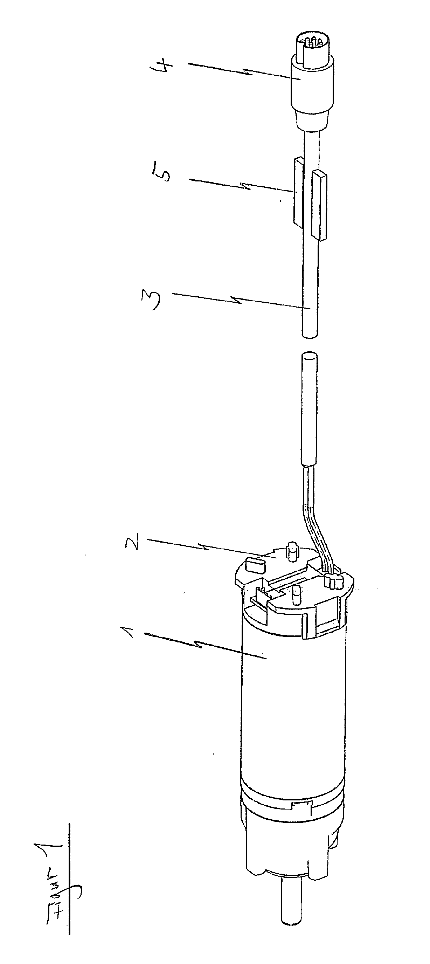

Die Darstellung in Fig. 1 zeigt eine Antriebsquelle einer Antriebssäule 6. Die Antriebsquelle weist einen Motor 1 auf. In der bevorzugten Ausführungsform gleicht die Umfangsfläche des Motors 1 einem Zylindermantel, so dass diese eine im Wesentlichen glatte Oberfläche darstellt.

In anderen Ausführungsformen kann der Motor eine andere Form aufweisen, entsprechend dem jeweiligen Verwendungszweck und - ort.

Die Antriebssäule 6 enthält des Weiteren eine Motorplatine 2. Die Motorplatine 2 ist an einer ersten Stirnfläche des Motors 1 angeordnet. Dabei weist die Motorplatine 2 denselben maximalen Außenumfang auf wie der Motor 1, so dass sich keine Komponenten der Motorplatine 2 in einer radialen Richtung über die Umfangsfläche hinaus erstrecken. Die Motorplatine 2 weist dabei eine Mehrzahl von elektrischen Anschlüssen auf.

Weiterhin weist die Antriebsquelle ein Motorzuleitungskabel 3 auf. In der bevorzugten Ausführungsform der vorliegenden Erfindung wird die Motorplatine 2 an einer Steckverbindung mit dem Motorzuleitungskabel 3 verbunden. Das Motorzuleitungskabel 3 ist dabei ein mehradriges Kabel.

Die Antriebsquelle weist zudem einen Motorstecker 4 auf. Die verschiedenen Adern des Motorzuleitungskabels 3 laufen in der bevorzugten Ausführungsform in diesem Motorstecker 4 zusammen.

In weiteren Ausführungsformen kann anstelle von einem einzigen Kabel eine Mehrzahl von Kabeln verwendet werden. Folglich ist es auch denkbar, dass anstelle des einen Motorsteckers 4 eine Mehrzahl von Steckern verwendet wird.

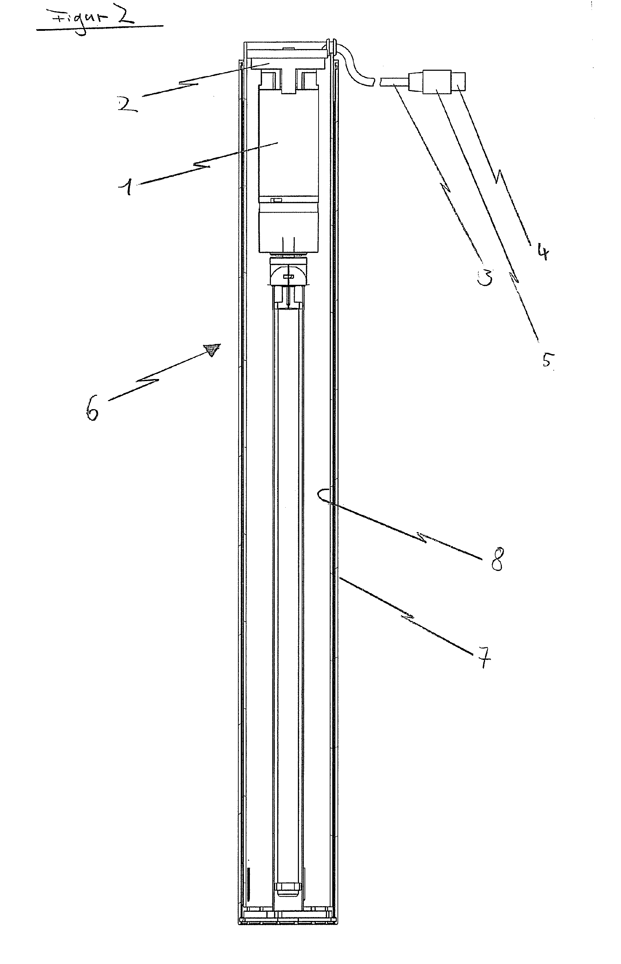

Die Antriebssäule 6, in die die Antriebsquelle eingebracht wird, besteht aus einem festen Abschnitt 7 (z.B. ein Standbein eines Möbelstücks, wie später erläutert wird) und aus einem beweglichen Abschnitt 8 (vgl. Fig. 2). Der bewegliche Abschnitt 8 lässt sich dabei von der Antriebsquelle relativ zu dem festen Abschnitt 7 bewegen.

Dabei sind der feste Abschnitt 7 und der bewegliche Abschnitt 8 beispielsweise so ausgebildet, dass diese sich teleskopartig gegeneinander verschieben lassen.

Ein Getriebe des Motors 1 schließt sich an einer zweiten Stirnseite des Motors 1, die der Motorplatine 2 abgewandt ist, an den Motor 1 an.

In der bevorzugten Ausführungsform ist der Motor ein elektrischer Schrittmotor, der durch mechanischen Kontakt die Bewegung des beweglichen Abschnitts 8 relativ zu dem festen Abschnitt 7 bewirkt.

Es ist jedoch in anderen Ausführungsformen vorstellbar, dass der Motor beispielsweise ein Kompressormotor ist, so dass eine Bewegung der Abschnitte zueinander durch Druckluft verursacht wird.

Erfindungsgemäß ist in der Antriebsquelle ein Identifizierungsmittel, das elektronisch ausgelesen werden kann, im Folgenden als ein elektronisches Identifizierungsmittel 5 bezeichnet, vorgesehen. Das Identifizierungsmittel 5 kann dabei beispielsweise entweder in die Motorplatine 2, das Motorzuleitungskabel 3 (vgl. Ausführungsform gemäß Fig. 1) oder den Motorstecker 4 (vgl. Ausführungsform gemäß Fig. 2) integriert sein. Es muss lediglich sichergestellt sein, dass eine Stromversorgung für das bzw. eine Datenverbindung mit dem Identifizierungsmittel 5 möglich ist.

Das Identifizierungsmittel 5 ist in der bevorzugten Ausführungsform als ein Datenspeicher ausgebildet. Auf dem Datenspeicher sind Identifizierungsdaten in elektronischer Form hinterlegt. Diese Identifizierungsdaten können Informationen über die spezifische Art der Antriebsquelle, die Verfahrdaten der Antriebsquelle und Ähnliches beinhalten. Es sind jedoch mindestens solche Daten auf dem Identifizierungsmittel 5 verfügbar, die eine Steuerung der Antriebsquelle ermöglichen.

In der bevorzugten Ausführungsform weist das Identifizierungsmittel 5 ein Datenverbindungsmittel auf. Die Funktion dieses Datenverbindungsmittels wird später erläutert.

Wie in Fig. 2 gezeigt ist, ist bei erfindungsgemäßer Verwendung die oben beschriebene Antriebsquelle in einer Antriebssäule 6 vorgesehen. Die Außenform des Motors und der Platine entspricht dabei der Form der Säule, in der die Antriebsquelle vorgesehen ist.

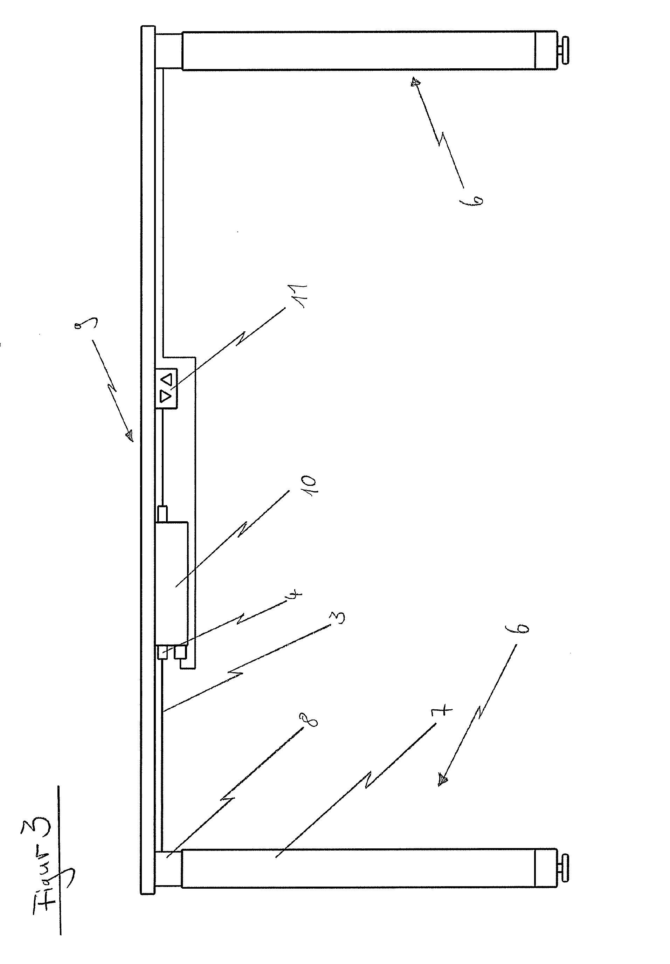

Die Antriebssäule 6 ist dabei vorzugsweise ein Teil eines Möbelstücks 9, wie zum Beispiel ein Bein eines Tisches oder eines Sessels, oder Ähnliches (vgl. Fig. 3).

Wie Fig. 3 zeigt, weist das Möbelstück 9 seinerseits eine Steuereinheit 10 auf. Die Steuereinheit 10 ist beispielsweise unter einer Tischplatte des Möbelstücks 9, oder darin angeordnet. Die Steuereinheit 10 ist in der vorliegenden Ausführungsform mit einem Handschalter 11 verbunden. Der Handschalter 11 ermöglicht dem Benutzer die Bedienung des Möbelstücks 9. Die Verbindung zwischen der Steuereinheit 10 und dem Handschalter 11 kann dabei sowohl über Kabel, als auch kabellos erfolgen. Als mögliche Übertragungsweisen können in letzterem Fall beispielsweise Funk, Infrarot, Blue Tooth und Andere verwendet werden.

Die Steuereinheit 10 weist zudem ein Datenverbindungsmittel auf. Mit dem Datenverbindungsmittel ist es möglich eine Datenverbindung mit einem anderen Datenverbindungsmittel aufzubauen. Das Datenverbindungsmittel weist in einer bevorzugten Ausführungsform sowohl eine Sender- als auch eine Empfangseinheit auf.

Es ist in anderen Ausführungsformen denkbar, dass die Steuereinheit des Möbelstücks nur entweder eine Sendereinheit oder eine Empfängereinheit aufweist.

Zudem ist in der bevorzugten Ausführungsform eine Antriebssäule 6 in das Möbelstück integriert. Es ist jedoch auch möglich, dass mehr als eine Antriebssäule 6 vorgesehen ist (vgl. Fig. 3).

Erfindungsgemäß wird die Antriebsquelle in die Antriebssäule 6 eingebracht und darin befestigt. Die Antriebssäule 6 wiederum ist als ein Bestandteil eines Möbelstückes 9, beispielsweise als ein Fuß eines Tisches, oder als ein Teil eines Fußes, ausgebildet. Die Antriebssäule 6 wird dann auf geeignete Weise an dem Möbelstück 9 montiert.

Ein Schritt der Montage umfasst die Ausbildung einer mechanischen Verbindung zwischen der Antriebssäule 6 und dem Möbelstück 9. Ein weiterer Schritt der Montage ist das Herstellen einer Stromversorgung für den Motor 1. Die Stromversorgung erfolgt über das Motorzuleitungskabel 3 durch Verbinden des Motorsteckers 4 mit einer mittelbaren oder unmittelbaren Stromquelle. In der bevorzugten Ausführungsform dient die Steuereinheit 10 des Möbelstücks 9 als mittelbare Stromquelle, die Ihrerseits an eine Stromversorgung angeschlossen ist. Das mehradrige Motorzuleitungskabel 3 dient in dieser Ausführungsform gleichzeitig als ein Verbindungsmittel zwischen den Datenverbindungsmitteln der Steuereinheit 10 und dem Identifizierungsmittel 5 der Antriebssäule 6. Das Datenverbindungsmittel verbindet die Steuereinheit 10 mit dem Identifizierungsmittel 5 der Antriebssäule 6, sowie mit der Motorplatine 2. Eine Steuerung des Motors 1 kann somit von der Steuereinheit 10 des Möbelstücks 9 durchgeführt werden.

Das Identifizierungsmittel 5 ist in der bevorzugten Ausführungsform als ein Datenspeicher ausgebildet. Dieser Datenspeicher kann beispielsweise ein EEPROM sein. Es ist jedoch auch möglich, dass das Identifizierungsmittel 5 ein Mikrocontroller oder eine ganze Steuereinheit ist, so lange diese auch in der Lage sind, die relevanten Daten zu speichern und zu übertragen. Aus Gründen einer einfacheren Herstellung ist, wie im Falle der Ausführungsform gemäß Fig. 2, das Identifizierungsmittel 5 vorzugsweise in den Motorstecker 4 integriert.

In anderen Ausführungsformen können die Stromversorgung und das Datenverbindungsmittel als getrennte Kabel ausgebildet sein, so dass insbesondere die Stromversorgung der Antriebssäule nicht über die Steuereinheit erfolgen muss.

In einem weiteren Schritt, nach der mechanischen Montage der Antriebssäule 6, wird eine Datenverbindung zwischen dem Identifizierungsmittel 5 und der Steuereinheit 10, insbesondere zwischen deren Datenverbindungsmitteln, hergestellt. Das Identifizierungsmittel 5 der Antriebssäule 6 überträgt dabei in der bevorzugten Ausführungsform Daten an die Steuereinheit 10. Diese Daten beinhalten insbesondere die Verfahrdaten der Antriebssäule 6, bzw. des Motors 1 der Antriebssäule 6. Somit wird eine genaue Zuordnung der Antriebssäule 6 gewährleistet, und eine Verwechslungsgefahr ist reduziert. Dadurch wird gleichzeitig auch eine korrekte Ansteuerung des Motors 1 sichergestellt.

Die Steuereinheit 10 muss in dieser bevorzugten Ausführungsform nicht mehr spezifisch für Kundenwünsche vorprogrammiert sein. Vielmehr wird durch die Datenübertragung von dem Identifizierungsmittel 5 die Steuereinheit 10 programmiert.

Die Steuereinheit 10 übernimmt dann die Steuerung von Start und Stopp des Motors 1, sowie dessen Leistungsversorgung bzw. dessen Leistungsausgabe.

Die Datenverbindung wird in der vorliegenden Ausführungsform mit einem Kabel hergestellt, das in dem mehradrigen Motorzuleitungskabel 3 integriert ist. Das Datenverbindungsmittel des Identifizierungsmittels 5 und das Datenverbindungsmittel der Steuereinheit 10 werden so direkt miteinander verbunden. Ein Datenverkehr kann dabei in beide Richtungen erfolgen, auch wenn dies in der bevorzugten Ausführungsform nur von dem Identifizierungsmittel 5 zu der Steuereinheit 10 des Möbelstücks 9 erfolgen muss.

In einer weiteren Ausführungsform ist es auch möglich, dass das Identifizierungsmittel 5 und die Steuereinheit 10 des Möbelstücks 9 kabellos miteinander verbunden sind. In diesem Fall weisen sowohl das Identifizierungsmittel 5 als auch die Steuereinheit 10 des Möbelstücks 9 eine Sender-/ bzw. Empfängereinheit auf, oder vorzugsweise beides. Die Datenübertragung kann dann durch gängige Übertragungsverfahren, wie z.B. Funk, Infrarot, Blue Tooth oder Ähnliches erfolgen.

Es ist weiterhin in einer Ausführungsform möglich, dass einer Steuereinheit 10 mehr als eine Antriebssäule zugeordnet ist. In diesem Fall stellt die Steuereinheit 10 mit allen Identifizierungsmitteln in den Antriebssäulen eine Verbindung her. Weiterhin steuert die Steuereinheit 10 Start und Stopp sowie die Leistung der einzelnen Motoren, und synchronisiert die einzelnen Antriebssäulen. Zudem ist es auch möglich, dass die einzelnen Identifizierungsmittel untereinander eine Datenverbindung herstellen.

Wird in der Antriebssäule 6 als das Identifizierungsmittel 5 ein Mikrocontroller oder eine Steuereinheit verwendet, kann eine dezentrale Steuerung der Antriebssäulen erfolgen. Solch eine dezentrale Steuerung kann dann unabhängig von der Steuereinheit 10 in dem Möbelstück 9 erfolgen. Die Synchronisierung der Antriebssäulen kann dann ebenfalls unabhängig von der Steuereinheit 10 des Möbelstücks 9 erfolgen.

In der bevorzugten Ausführungsform ist des Weiteren ein Mittel zum Erfassen der Verstellung der Antriebssäule vorgesehen (nicht gezeigt). Dieses Mittel erfasst in diesem Fall die Hubposition der Antriebssäule 6. Beispielsweise können so genannte Hall-ICs verwendet werden. Diese erfassen die Drehpositionen der Motoren und ermöglichen damit einen Schluss auf die jeweilige Hubposition.

Es ist zudem in einer weiteren Ausführungsform möglich, dass die Antriebssäule 6 oder das Möbelstück 9 weitere Mittel zum Erfassen der Verstellung der Antriebssäule 6 aufweist. So ist es möglich, dass ein Mittel die absolute Höhe einer Tischplatte über dem Boden erfasst, oder dass eine Neigung einer Tischplatte in verschiedenen Ebenen, gemessen wird. Diese Messsignale ermöglichen dann eine Nachjustierung, die entweder von der Steuereinheit 10 des Möbelstücks 9, oder von den Identifizierungsmitteln 5 der Antriebssäulen 6 vorgenommen wird.

Zusammenfassend lässt sich sagen, dass in einer bevorzugten Ausführungsform eine Antriebssäule 6, beispielsweise eines Möbelstücks 9, einen Motor 1, eine Motorplatine 2, ein Motorzuleitungskabel 3 und einen Motorstecker 4 enthält. In der Antriebssäule 6 ist in die Motorplatine 2, das Motorzuleitungskabel 3 oder den Motorstecker 4 ein Identifizierungsmittel 5 integriert, auf dem Daten zur Identifizierung der jeweiligen Antriebssäule 6 hinterlegt sind. Bei der Montage werden diese Daten auf eine Steuereinheit 10 des Möbelstücks 9 übertragen und programmieren diese entsprechend, so dass eine Verwechslungsgefahr reduziert wird und das Herstellungsverfahren vereinfacht wird.

## Patentansprüche

1. Antriebssäule aufweisend einen feststehenden Abschnitt (7), einen beweglichen Abschnitt (8) und eine Antriebsquelle, wobei die Antriebsquelle eine Verstellung des beweglichen Abschnitts (8) relativ zu dem feststehenden Abschnitt (7) ermöglicht, **dadurch gekennzeichnet, dass**
die Antriebssäule (6) ein elektronisches Identifizierungsmittel (5) aufweist.

2. Antriebssäule gemäß Anspruch 1, **dadurch gekennzeichnet, dass** das Identifizierungsmittel (5) ein Datenspeicher mit darauf hinterlegten Daten ist, der eine Identifizierung der Antriebssäule (6) ermöglicht.

3. Antriebssäule gemäß Anspruch 2, wobei in dem Datenspeicher der Antriebssäule (6) eine Steuereinheit vorgesehen ist.

4. Antriebssäule gemäß einem der vorhergehenden Ansprüche, **dadurch gekennzeichnet, dass** die Antriebssäule (6) ein Mittel zum Bestimmen der vorliegenden Verstellung des beweglichen Abschnitts (8) aufweist.

5. Antriebssäule gemäß einem der vorhergehenden Ansprüche, **dadurch gekennzeichnet, dass** der Datenspeicher ein Mikrocontroller ist.

6. Möbelstück das mindestens eine Antriebssäule (6) gemäß einem der vorhergehenden Ansprüche aufweist,
**dadurch gekennzeichnet, dass** an dem Möbelstück (9) eine Steuereinheit (10) zum Steuern der mindestens einen Antriebssäule (6) sowie ein Datenverbindungsmittel vorgesehen ist, das mit dem Identifizierungsmittel (5) der mindestens einen Antriebssäule (6) in Verbindung steht.

7. Möbelstück gemäß Anspruch 6, **dadurch gekennzeichnet,**
**dass** das Identifizierungsmittel (5) der mindestens einen Antriebssäule (6) ein Datenverbindungsmittel aufweist.

8. Möbelstück gemäß Anspruch 6 oder 7, **dadurch gekennzeichnet, dass** das Datenverbindungsmittel eine Sendereinheit und/oder eine Empfängereinheit enthält.

9. Möbelstück gemäß einem der Ansprüche 6 bis 8, **dadurch gekennzeichnet,**
**dass** die Datenverbindung eine drahtlose Verbindung zwischen zwei Datenverbindungsmitteln ist.

10. Möbelstück gemäß einem der Ansprüche 6 bis 9, **dadurch gekennzeichnet, dass**,
bei Verwendung mehrerer Antriebssäulen (6), die Antriebssäulen (6) unabhängig voneinander steuerbar sind.

11. Möbelstück gemäß einem der Ansprüche 6 bis 10,
**dadurch gekennzeichnet, dass** bei Verwendung mehrerer Antriebssäulen (6) die Identifizierungsmittel (5) der Antriebssäulen (6) in direkter Datenverbindung zueinander stehen.

12. Antriebssäule zur Verwendung in einem Möbelstück (9) gemäß einem der Ansprüche 6 bis 11.

13. Verfahren zur Montage eines Möbelstücks (9) gemäß einem der Ansprüche 6 bis 11, **dadurch gekennzeichnet, dass** eine mechanische Verbindung und eine Datenverbindung zwischen dem Möbelstück (6) und mindestens einer Antriebssäule (6) hergestellt wird,
wobei nach dem Herstellen der Datenverbindung zwischen der Steuereinheit (10) und der mindestens einen Antriebssäule (6) das Identifizierungsmittel (5) der Antriebssäule (6) Identifizierungsdaten an die Steuereinheit (10) sendet.

14. Verfahren gemäß Anspruch 13, wobei bei der Montage von mehreren Antriebssäulen (6) eine Datenverbindung zwischen den einzelnen Antriebssäulen (6) untereinander und mit der Steuereinheit (10) des Möbelstücks (9) hergestellt wird.

## Geänderte Patentansprüche

### Geänderte Patentansprüche gemäss Regel 137(2) EPÜ.

**1.** Antriebssäule aufweisend einen feststehenden Abschnitt (7), einen beweglichen Abschnitt (8) und eine Antriebsquelle, wobei die Antriebsquelle eine Verstellung des beweglichen Abschnitts (8) relativ zu dem feststehenden Abschnitt (7) ermöglicht, **dadurch gekennzeichnet, dass**
die Antriebssäule (6) ein elektronisches Identifizierungsmittel (5) aufweist und
auf dem elektronischen Identifizierungsmittel Daten zur Steuerung der Antriebsquelle verfügbar sind.

**2.** Antriebssäule gemäß Anspruch 1, **dadurch gekennzeichnet, dass** das Identifizierungsmittel (5) ein Datenspeicher mit darauf hinterlegten Daten ist, der eine Identifizierung der Antriebssäule (6) ermöglicht.

**3.** Antriebssäule gemäß Anspruch 2, wobei in dem Datenspeicher der Antriebssäule (6) eine Steuereinheit vorgesehen ist.

**4.** Antriebssäule gemäß einem der vorhergehenden Ansprüche, **dadurch gekennzeichnet, dass** die Antriebssäule (6) ein Mittel zum Bestimmen der vorliegenden Verstellung des beweglichen Abschnitts (8) aufweist.

**5.** Antriebssäule gemäß einem der vorhergehenden Ansprüche, **dadurch gekennzeichnet, dass** der Datenspeicher ein Mikrocontroller ist.

**6.** Möbelstück das mindestens eine Antriebssäule (6) gemäß einem der vorhergehenden Ansprüche aufweist,
**dadurch gekennzeichnet, dass** an dem Möbelstück (9) eine Steuereinheit (10) zum Steuern der mindestens einen Antriebssäule (6) sowie ein Datenverbindungsmittel vorgesehen ist, das mit dem Identifizierungsmittel (5) der mindestens einen Antriebssäule (6) in Verbindung steht.

**7.** Möbelstück gemäß Anspruch 6, **dadurch gekennzeichnet,**
**dass** das Identifizierungsmittel (5) der mindestens einen Antriebssäule (6) ein Datenverbindungsmittel aufweist.

**8.** Möbelstück gemäß Anspruch 6 oder 7, **dadurch gekennzeichnet,**
**dass** das Datenverbindungsmittel eine Sendereinheit und/oder eine Empfängereinheit enthält.

**9.** Möbelstück gemäß einem der Ansprüche 6 bis 8, **dadurch gekennzeichnet,**
**dass** die Datenverbindung eine drahtlose Verbindung zwischen zwei Datenverbindungsmitteln ist.

**10.** Möbelstück gemäß einem der Ansprüche 6 bis 9, **dadurch gekennzeichnet, dass**,
bei Verwendung mehrerer Antriebssäulen (6), die Antriebssäulen (6) unabhängig voneinander steuerbar sind.

**11.** Möbelstück gemäß einem der Ansprüche 6 bis 10,
**dadurch gekennzeichnet, dass** bei Verwendung mehrerer Antriebssäulen (6) die Identifizierungsmittel (5) der Antriebssäulen (6) in direkter Datenverbindung zueinander stehen.

**12.** Antriebssäule zur Verwendung in einem Möbelstück (9) gemäß einem der Ansprüche 6 bis 11.

**13.** Verfahren zur Montage eines Möbelstücks (9) gemäß einem der Ansprüche 6 bis 11, **dadurch gekennzeichnet, dass** eine mechanische Verbindung und eine Datenverbindung zwischen dem Möbelstück (6) und mindestens einer Antriebssäule (6) hergestellt wird,
wobei nach dem Herstellen der Datenverbindung zwischen der Steuereinheit (10) und der mindestens einen Antriebssäule (6) das Identifizierungsmittel (5) der Antriebssäule (6) Identifizierungsdaten an die Steuereinheit (10) sendet.

**14.** Verfahren gemäß Anspruch 13, wobei bei der Montage von mehreren Antriebssäulen (6) eine Datenverbindung zwischen den einzelnen Antriebssäulen (6) untereinander und mit der Steuereinheit (10) des Möbelstücks (9) hergestellt wird.
